(19) Europäisches Patentamt / European Patent Office / Office européen des brevets

(11) **EP 4 553 781 A1**

(12) **EUROPEAN PATENT APPLICATION**

(43) Date of publication:
**14.05.2025 Bulletin 2025/20**

(21) Application number: **23209233.8**

(22) Date of filing: **10.11.2023**

(51) International Patent Classification (IPC):
*G06V 10/25* (2022.01)    *G06V 10/82* (2022.01)
*G06V 20/70* (2022.01)

(52) Cooperative Patent Classification (CPC):
**G06V 10/82; G06V 10/25; G06V 20/70**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Helsing GmbH**
**81671 Munich (DE)**

(72) Inventor: **KUCIK, Andrzej**
**81671 Munich (DE)**

(74) Representative: **Rummler, Felix**
**Maucher Jenkins**
**Liebigstraße 39**
**80538 München (DE)**

(54) **DETECTING OBJECT LOCATIONS ON SPATIAL DATA ITEMS**

(57)    A computer-implemented method of training a machine learning model for detecting locations of objects on spatial data items, preferably images, the method comprising: determining one or more segmentation maps, wherein each segmentation map corresponds to a spatial data item and comprises one or more segments indicative of the locations, determining a training data set that comprises one or more of the spatial data items as input data and one or more corresponding segmentation map as a ground truth, and training the model on the training data set to predict the segmentation maps.

**Fig. 2**

## Description

## Technical Field

The present disclosure relates to systems, computer-implemented methods, and computer program products for detecting locations of objects on spatial data items, preferably images. The method is applicable in the fields of signal processing, sensor fusion, image processing, and artificial intelligence.

## Background

A frequent problem in the field of processing of spatial data is detecting small objects. In some cases, small objects are visible as features that have low coverage. Therefore, image processing models, in particular machine learning models, have difficulty processing them.

There is a need for systems and methods that overcome this shortcoming.

## Summary

Disclosed and claimed herein are systems, methods, and computer program products for detecting locations of objects on spatial data items, preferably images.

A first aspect of the present disclosure relates to a computer-implemented method of training a machine learning model for detecting locations of objects on spatial data items, preferably images. The method comprises the following steps:

- determining one or more segmentation maps, wherein each segmentation map corresponds to a spatial data item and comprises one or more segments indicative of the locations,
- determining a training data set that comprises one or more of the spatial data items as input data and one or more corresponding segmentation map as a ground truth, and
- training the model on the training data set to predict the segmentation maps.

This allows generating a trained model that can determine segments indicative of locations of objects on the spatial data. The model is trained as a segmentation model, which allows obtaining a reliably working segmentation model. However, the model is applicable to determine locations because the segments indicate locations. The second aspect of the present disclosure relates to such an application. This is described below.

In an embodiment, training the model includes determining a segmentation loss, preferably a cross-entropy loss, a dice metric, and/or a weighted sum thereof. These metrics are specifically suitable for training segmentation models and enable reliable training.

In another embodiment, a segmentation map includes a heat map, preferably comprising values indicative of a probability that an object is located at a position on the corresponding spatial data item. This has the advantage, compared to discrete, e.g. binary segmentation maps, that combines two features: First, it can show a location as a distribution with a non-zero spatial extension, and can therefore be processed by a segmentation model. Second, the heat map can indicate a precise location at the same time, e.g. by probability values exhibiting a local maximum.

In yet another embodiment, determining the segmentation maps includes:

- receiving an indication, in particular a set of coordinates, of a location of an object on a spatial data item,
- encoding the indication in the segmentation map, and
- preferably, blurring the indication, more preferably by generating a 2-dimensional Gaussian-shaped distribution.

This provides an algorithmic process of determining the segmentation map. An indication of a location, which can be in any data format, can thereby be included in an embedding suitable for a segmentation algorithm that is operable for retrieving the location with high precision.

In a further embodiment, the spatial data items include images, preferably images of the surface of the earth, and more preferably patches of images of the surface of the earth, wherein the patches have identical size. The model is particularly well suited for processing these data because objects of a class, e.g., cars on a satellite image, tend to have a more or less constant size, and they are identifiable as small clusters of pixels.

In yet a further embodiment, the method further comprises applying a radiometric and/or geometric augmentation, preferably a random augmentation, to one or more of the spatial data items prior to training the model, the augmentation comprising one or more of: normalising, mean centring, standardising, and/or affine transform, in particular rescaling, cropping, and/or flipping. These augmentations increase a variability in the data and thereby improve training performance

In another embodiment, the method further comprises applying a geometric augmentation to one or more of the segmentation maps, preferably identical to a geometric augmentation of a corresponding spatial data item.

In yet another embodiment, the model includes a segmentation network, in particular a transformer-type machine learning model. Segmentation networks are particularly suitable for classifying images.

A second aspect of the present disclosure relates to a computer-implemented method of detecting locations of objects on spatial data items, preferably images, the method comprising:

- determining, by a machine learning model, a segmentation map comprising at least one segment indicative of a location of an object,
- determining coordinates of one or more of the locations from the segment, preferably by a peak detection, watershed algorithm, and/or determination of a centre or centre of mass, to determine a location dataset.

This allows processing, by a segmentation model, a spatial data item and determining a segment. The post-processing step allows retrieving the coordinates. Peak detection and watershed algorithms are particularly suited for processing a heat map. The determination of a centre or centre of mass can be applied to segmentation masks or heat maps, and is particularly preferable in case where the segmentation map includes a segmentation mask.

In an embodiment, the machine learning model is obtained or obtainable by a method of the first aspect of the present disclosure.

In another embodiment, the method further comprises the following steps:

- processing the segmentation map by applying a threshold prior to determining the coordinates, and/or
- removing first coordinates from the location dataset based on a distance of the coordinates to second coordinates in the location dataset.

Applying the threshold allows removing possible false positives that could be caused by noise. Removing first coordinates avoids false categorization of extended objects as two instances of the same object.

In yet another embodiment, the method further comprises evaluating the model based on a confidence value of the locations. The evaluation allows a comparison with existing data.

A third aspect of the present disclosure relates to a system comprising one or more processors and one or more storage devices. The system is configured to perform the computer-implemented method of the first and/or second aspect of the present disclosure.

A fourth aspect of the present disclosure relates to a computer program product for loading into a memory of the system. The computer program comprises instructions, that, when executed by a processor of the system, cause the system to execute a method of the first and/or second aspect of the present disclosure.

In an embodiment, a non-transitory computer-readable storage medium is provided that stores instructions executable by one or more processors for clustering one or more electromagnetic emitter signals. The instructions comprise any of the steps of a method of the first and/or second aspect of the present disclosure.

A fifth aspect of the present disclosure relates to a computer program product comprising a trained machine learning module obtainable by the computer-implemented method of the first aspect of the present disclosure. In an embodiment, a non-transitory computer-readable storage medium is provided that stores the trained self-attention machine learning module.

## Brief description of the drawings

The features, objects, and advantages of the present disclosure will become more apparent from the detailed description set forth below when taken in conjunction with the drawings in which like reference numerals refer to similar elements.

- Figure 1 shows a block diagram of data structures 100.
- Figure 2 shows a flow chart of a computer-implemented method 200 of training a machine learning model.
- Figure 3 shows a flow chart of a computer-implemented method 300 of detecting locations of objects.
- Figure 4 shows a block diagram of a system for training a machine learning model.
- Figure 5 shows a block diagram of computer program products.

## Detailed description of the preferred embodiments

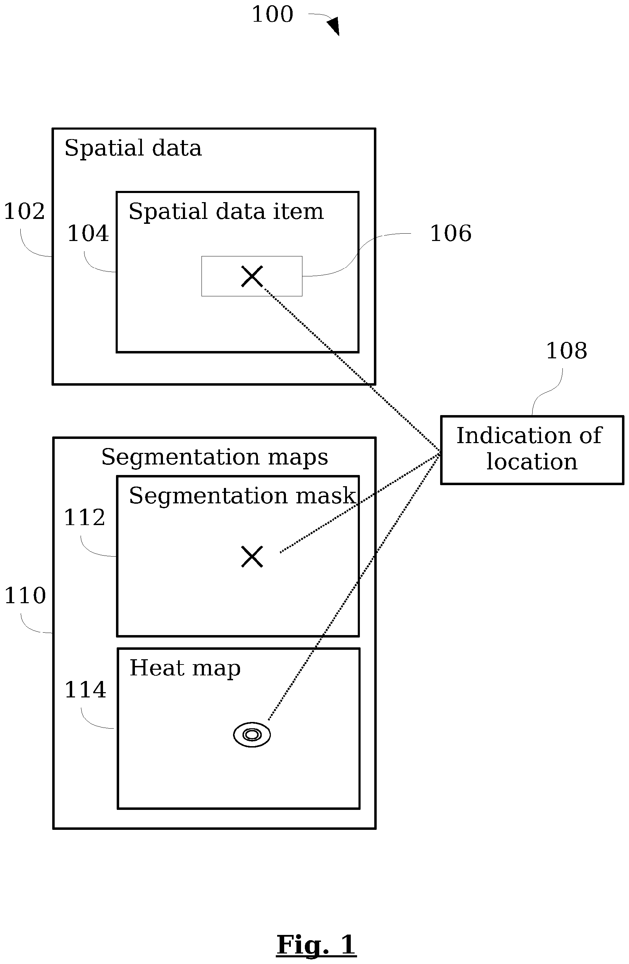

Figure 1 shows a block diagram of data structures 100. The data structures include spatial data 102 comprising items 104.

The spatial data item 104 of this example includes a two-dimensional image. The spatial data item is, however, not limited to images. It could also include 1-dimensional data, such as a signal from a CCD array, 3-dimensional data, such as computer tomography images, or data in higher dimensions. The spatial data item depicts an object 106 whose centre is marked by a cross in the Figure. The spatial data item 104 may have a suitable data format that allows storing at least the spatial data in its dimensionality. The data format may include non-spatial dimensions on top of the spatial dimensions. For example, an RGB colour image has two spatial dimensions and a further dimension for the colour channels.

The spatial data items 104 may include images that show a part of the surface of the earth. They may include patches of satellite images. The images may have been produced by an optical camera, or by other techniques such as imaging radar, for example a Synthetic Aperture Radar (SAR). SAR data are usually discretized into 16-bit images, and the pixel values approximately follow a Rayleigh distribution. The data are not generally normalized.

The indication 108 of the location of the object 106 includes information on the position of the centre of the object 106, which can be defined as a centre of gravity. Alternative indications of a location of an object can relate to where a given part of the object is. In the case of satellite images, a location of a ship can be defined, by convention, as the position of its bow. However, it is preferable to define the centre of gravity of the object as depicted in the spatial data because this definition can be applied independently from the orientation of the object on the image. Thereby, the location is indicated by the location of a point, i.e., it can be indicated as the coordinates on the spatial data using a suitable coordinate system. Coordinates may include pixel positions, or latitude/longitude data in the case where the spatial data includes georeferenced satellite images.

The segmentation maps 110 correspond to the spatial data and have the same number of spatial dimensions as the spatial data item 104. The segmentation mask 112 shown in this example is a binary segmentation mask which has, for each pixel, a value of "1" if the pixel belongs to a predetermined segment and a value of "0" if the pixel does not belong to the predetermined segment. Encoding the indication 108 of the location into the segmentation mask 112 can be done by setting the pixel corresponding to the location to "1" and all other pixels to "0". This would produce a precise encoding of the location, but the segmentation mask would be computationally difficult to process, because segmentation models have limited reliability when only one pixel belongs to the segment.

Therefore, it is preferable to specify the segmentation map as a heat map 114. Here, the heat map 114 has the same spatial dimensions as the spatial data item. However, its values are continuous, e.g. real values. Encoding the indication 108 of the location may still include initializing the heat map with zeros and setting the pixel value at the indicated location to " 1". However, the data can be spatially amplified by setting values in proximity to non-zero values. In the present example, this is done by drawing a 2-dimensional Gaussian centred at the location, as schematically indicated by the contour lines. The Gaussian may be asymmetric as shown, or symmetric. This allows processing by segmentation algorithms, and keeps the precision of the encoding, because the centre position is still defined at pixel accuracy.

The data structures can be extended to a plurality of classes by adding a further dimension to the indication 108 of the location and the segmentation maps. For example, a stack of segmentation masks 112 or a stack of heat maps 114 can be defined, which include a segmentation map for each class. Similarly, data structures for a plurality of instances of a class can be defined.

Therefore, the indication 108, e.g. the coordinates, can be retrieved from the heat map 114 algorithmically, for example by peak detection.

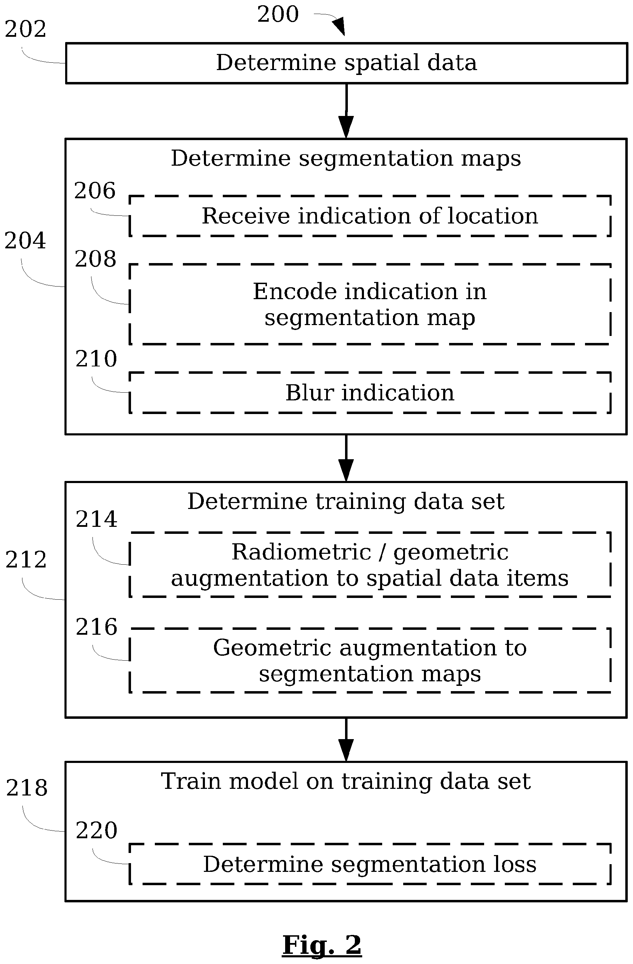

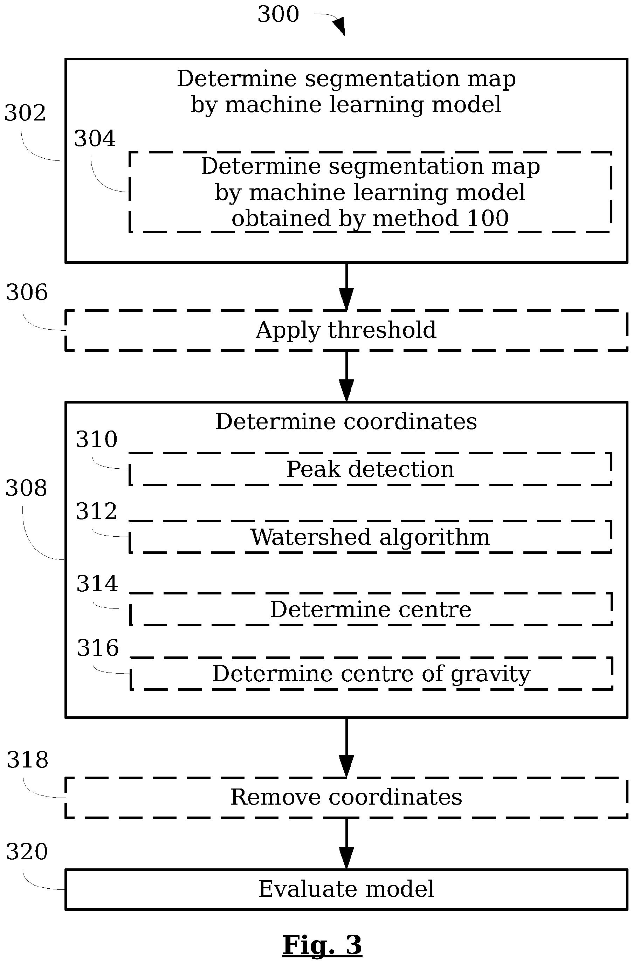

The data structures 100 can be used as training data to train a machine learning model to determine a location of an object. In this case, the spatial data item 104 is included in the input data to be supplied to and processed by the model. The segmentation maps 110, into which the indication of the location is encoded, can then serve as a ground truth for training. A training process 200 is shown in Figure 2. A trained machine learning module can be applied to determine a heat map similar to heat map 114 by processing unknown spatial data items similar to spatial data items 104. An inference process 300 is shown in Figure 3.

Figure 2 shows a flow chart of a computer-implemented method 100 of training a machine learning model to process spatial data and predict a segmentation map.

The method begins by determining, 202, spatial data. The spatial data items may include satellite images and/or SAR images. It is preferred if the spatial data include fixed size chips cropped out of one or more satellite images at random positions.

At 204, one or more segmentation maps are determined. The segmentation maps are related to the input spatial data determined in step 202 and may be similar to the segmentation maps 110 and in particular include heat maps 114 as shown in Figure 1. In principle, the segmentation maps can be determined by loading from memory, but it is preferred to generate the segmentation maps by receiving, 206, an indication of location and encoding, 208, the indication into a segmentation map. The indication of the location can include an indication 108, in particular coordinate values, as described with respect to Figure 1. Encoding, 208, includes initializing an array (i.e. tensor) with zeros. The array has spatial dimensions that are identical to the input spatial data to be processed. The pixels at the location, which corresponds to the centre of an object, are set to 1. This generates a segmentation mask. Subsequently, the indication may be blurred, 210, preferably by applying a Gaussian blur to the array. This amplifies the spatial extent of the indications. The resulting array has continuous values between 0 and 1. These values increase towards the encoded location. The shape can, in one dimension, be visualized as a Gaussian bell curve, and in two dimensions as a Gaussian bell surface. In higher dimensions, the shape can be referred to as a Gaussian blob. However, other shapes, such as supergauss, or other function that has localized values, approaches a final value at the centre, and has a limit of zero as a distance from the centre approaches infinity. The width of the Gaussian blob can be chosen by evaluation (step 320 of method 300 below), by observing for which values the trained model performs most accurately. The resulting array containing the one or more accordingly encoded indications is a heat map. In alternative embodiments, a segmentation mask can be generated by setting all values of the segmentation map above a threshold to one, and all other values to zero.

At 212, a training data set is determined. The training data set includes the segmentation map as a ground truth and the corresponding input spatial data item. It is preferable to apply, 214, radiometric and/or geometric augmentations to the input images. Geometric augmentations may include random flips and/or affine transformations. Radiometric augmentations may include adaptations to brightness, contrast, and a gamma curve. These augmentations may be used to introduce variety into the training data set so that overfitting is reduced. The model has been tested on a SAR image data set and the augmentations it has been found to improve the overall performance although some of the augmented spatial data items would seem physically implausible.

The spatial data are preferably normalized by a normalization technique, e.g. logarithmic, or arctan. It has been established by evaluation that the models perform the best when the images are logarithmically normalized. The rescaled data may then be centred around its mean, and the standard deviation may be set to 1. Here, it is preferred to calculate the mean for each spatial data item and the standard deviation as a global standard deviation of the training dataset.

The model is then trained, 218, on the training data set. Training may be done by backpropagation. As a loss function, it is preferred to use a weighted sum of a binary cross-entropy and dice losses:

$$L(x) = \alpha BCE(x, y) + \beta \, Dice(x, y)$$

Preferable values for the weights are $\alpha$ = 0.05 and $\beta$ = 1 were determined by evaluation. The input to the loss functions are the output of the neural network $y$ and the segmentation map $x$ as a ground truth.

Figure 3 shows a flow chart of a computer-implemented method 300 of detecting locations of objects. The method begins by determining, 302, using a machine learning model, a segmentation map comprising at least one segment indicative of a location of an object. It is preferred to determine, 304 the segmentation map by a machine learning model obtainable or obtained by method 100.

At optional step 306, a threshold is applied by setting all values below a predetermined threshold value to zero. This reduces false determinations due to noise. At step 308, coordinates are determined based on the segmentation map. It is preferred to apply, 310, a maximum detection, i.e. peak detection algorithm. Also, a Watershed algorithm 312 may be applied. These algorithms are, in particular, suitable if the segmentation map includes a heat map. In optional step 314, a centre of a set of pixels is determined. This is advantageous if the segmentation map contains circular features that can be approximated as circles. For example, the output of the model may include one or more contiguous regions that have a circular shape constant value, such as "1". In this case, a centre of the region may be determined. This is relevant if the segmentation map includes a segmentation mask. Alternatively or additionally, a centre of mass of a set of pixels may be determined, 316. This is advantageous if the segmentation map includes features of an irregular shape, and more advantageous if the segmentation map includes a segmentation mask containing features of irregular shape. The coordinates may be specified in a suitable coordinate system, such as Cartesian coordinates.

At optional step 318, for all coordinates a pairwise distance is determined. Among the pairs of coordinates whose distance is lower than a predetermined value, the coordinate related to the lower value on the segmentation map is removed. This allows removing some coordinates that are likely to pertain to the same object. At step 320, the model is evaluated based on a confidence value of the locations. If a plurality of spatial data items were chipped from a larger contiguous spatial data (such as image patches from a large SAR satellite data image) and have been analysed by steps 302-318, they are reassembled in step 320. The evaluation may include determining object detection metrics, preferably metrics derived from a confusion matrix, such as precision, recall, and/or F1 score. This evaluation allows determination of model parameters including the width of the Gaussian blobs, preprocessing parameters, and parameters of the loss function.

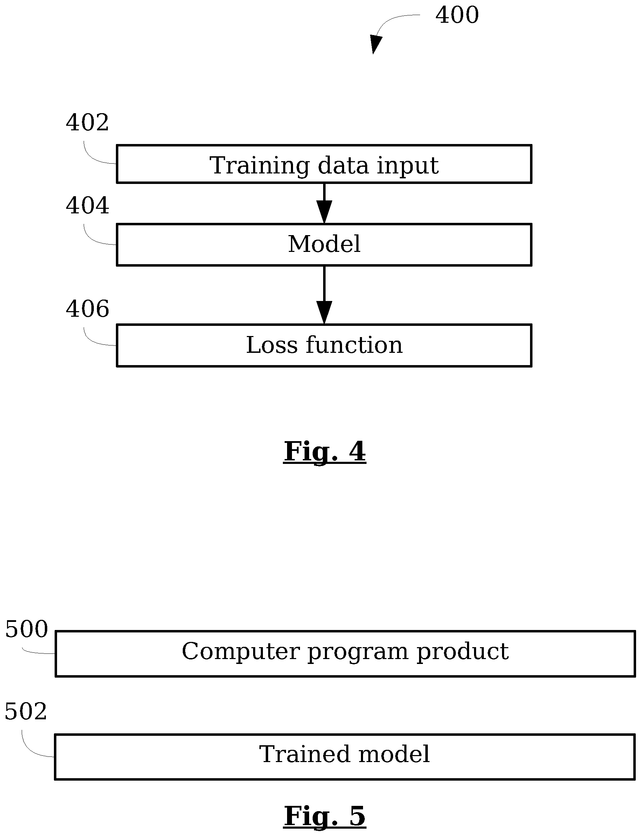

Figure 4 shows a block diagram of a system for training a machine learning model. The system comprises a training data input unit 402, which is operable to determine spatial data, segmentation maps, and the training data set according to steps 202-216 of method 200. The model 404 is trainable by method 200 and, after training, operable to execute steps 304 and, preferably, 304 of method 300. The model may include a transformer-type segmentation algorithm, for example a vision transformer, or a Swin transformer. The loss function 406 preferably includes a weighted sum of binary cross-entropy and dice loss as described with reference to Figure 2.

Figure 5 shows a block diagram of computer program products. A computer program product 500 is shown. The computer program product 500 is suitable for loading into a memory of a computer. It comprises instructions, that, when executed by a processor of the computer, cause the computer to execute the computer-implemented method 200 or computer-implemented method 300.

Furthermore, a computer program product 502 is shown. The computer program product comprises a trained machine learning module obtainable by the computer-implemented method 200.

## Reference signs

| 100 | Data structures |
|-----|-----------------|
| 102 | Spatial data |
| 104 | Spatial data item |
| 106 | Obj ect |
| 108 | Indication of location |

| 110 | Segmentation maps |
| 112 | Segmentation mask |
| 114 | Heat map |
| 200 | Computer-implemented method of training a machine learning model |
| 202-220 | Steps of method 200 |
| 300 | Computer-implemented method of detecting locations of objects |
| 302-320 | Steps of method 300 |
| 400 | System |
| 402 | Training data input |
| 404 | Model |
| 406 | Loss function |
| 500 | computer program products |
| 502 | Trained model |

**Claims**

1. A computer-implemented method of training a machine learning model (404) for detecting locations (108) of objects (106) on spatial data items (104), preferably images, the method comprising:

   determining one or more segmentation maps (110), wherein each segmentation map (110) corresponds to a spatial data item and comprises one or more segments indicative of the locations (108),
   determining a training data set that comprises one or more of the spatial data items (104) as input data and one or more corresponding segmentation map (110) as a ground truth, and
   training the model (404) on the training data set to predict the segmentation maps (110).

2. The computer-implemented method of claim 1, wherein training the model (404) includes determining a segmentation loss, preferably a cross-entropy loss, a dice metric, and/or a weighted sum thereof.

3. The computer-implemented method of any of the preceding claims,
   wherein a segmentation map (110) includes a heat map (114), preferably comprising values indicative of a probability that an object (106) is located at a position on the corresponding spatial data item.

4. The computer-implemented method of any of the preceding claims,
   wherein determining the segmentation maps (110) includes:

   receiving an indication, in particular a set of coordinates, of a location (108) of an object (106) on a spatial data item,
   encoding the indication in the segmentation map (110), and
   preferably, blurring the indication, more preferably by generating a 2-dimensional Gaussian-shaped distribution.

5. The computer-implemented method of any of the preceding claims,
   wherein the spatial data items (104) include images, preferably images of the surface of the earth, and more preferably patches of images of the surface of the earth, wherein the patches have identical size.

6. The computer-implemented method of any of the preceding claims,
   further comprising applying a radiometric and/or geometric augmentation, preferably a random augmentation, to one or more of the spatial data items (104) prior to training the model (404), the augmentation comprising one or more of: normalising, mean centring, standardising, and/or affine transform, in particular rescaling, cropping, and/or flipping.

7. The computer-implemented method of any of the preceding claims,
   further comprising applying a geometric augmentation to one or more of the segmentation maps (110), preferably identical to a geometric augmentation of a corresponding spatial data item.

8. The computer-implemented method of any of the preceding claims,
   wherein the model (404) includes a segmentation network, in particular a transformer-type machine learning model (404).

9. A computer-implemented method of detecting locations (108) of objects (106) on spatial data items, preferably images, the method comprising:

   determining, by a machine learning model (404), a segmentation map (110) comprising at least one segment indicative of a location (108) of an object (106),
   determining coordinates of one or more of the locations (108) from the segment, preferably by a peak detection, watershed algorithm, and/or determination of a centre or centre of mass, to determine a location dataset.

10. The computer-implemented method of claim 9, wherein the machine learning model (404) is obtained or obtainable by a method of any of claims 1-8.

11. The computer-implemented method of any of claims 9-10, further comprising:

    processing the segmentation map (110) by applying a threshold prior to determining the coordinates, and/or
    removing first coordinates from the location dataset based on a distance of the coordinates to second coordinates in the location dataset.

12. The computer-implemented method of any of claims 9-11,
further comprising evaluating the model (404) based on a confidence value of the locations.

13. A system (400) comprising one or more processors and one or more storage devices, wherein the system (400) is configured to perform the computer-implemented method of any one of claims 1-12.

14. A computer program product (500) for loading into a memory of a computer, comprising instructions, that, when executed by a processor of the computer, cause the computer to execute a computer-implemented method of any of claims 1-12.

15. A computer program product (502) comprising a trained machine learning module obtainable by the computer-implemented method of any of claims 1-8.

100

Spatial data

102

Spatial data item

104

106

×

108

Indication of location

Segmentation maps

Segmentation mask

112

110

×

Heat map

114

◎

**Fig. 1**

200

202

Determine spatial data

Determine segmentation maps

206 — Receive indication of location

208 — Encode indication in segmentation map

210 — Blur indication

204

Determine training data set

214 — Radiometric / geometric augmentation to spatial data items

216 — Geometric augmentation to segmentation maps

212

Train model on training data set

220 — Determine segmentation loss

218

**Fig. 2**

300

**Determine segmentation map by machine learning model**

302

304 Determine segmentation map by machine learning model obtained by method 100

306 Apply threshold

**Determine coordinates**

308

310 Peak detection

312 Watershed algorithm

314 Determine centre

316 Determine centre of gravity

318 Remove coordinates

320 Evaluate model

**Fig. 3**

400

402
Training data input

404
Model

406
Loss function

**Fig. 4**

500
Computer program product

502
Trained model

**Fig. 5**

Europäisches
Patentamt

European
Patent Office

Office européen
des brevets

# EUROPEAN SEARCH REPORT

Application Number

EP 23 20 9233

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WANG ZHENQING ET AL: "SDGH-Net: Ship Detection in Optical Remote Sensing Images Based on Gaussian Heatmap Regression", REMOTE SENSING, vol. 13, no. 3, 30 January 2021 (2021-01-30), page 499, XP093132731, CH ISSN: 2072-4292, DOI: 10.3390/rs13030499 * Sections 2 and 3; figures 1, 2, 5-7, 10 * | 1-15 | INV. G06V10/25 G06V10/82 G06V20/70 |
| X | US 2022/020167 A1 (WOO HA YONG [KR] ET AL) 20 January 2022 (2022-01-20) * paragraph [0055] - paragraph [0111]; figures 3-7, 8, 11-13 * | 1-5,8-12 | |
| | | | **TECHNICAL FIELDS SEARCHED (IPC)** |
| | | | G06V G06N G06T |

The present search report has been drawn up for all claims

| Place of search | Date of completion of the search | Examiner |
|---|---|---|
| The Hague | 20 February 2024 | Craciun, Paula |

EPO FORM 1503 03.82 (P04C01)

**ANNEX TO THE EUROPEAN SEARCH REPORT
ON EUROPEAN PATENT APPLICATION NO.**                    EP 23 20 9233

This annex lists the patent family members relating to the patent documents cited in the above-mentioned European search report.
The members are as contained in the European Patent Office EDP file on
The European Patent Office is in no way liable for these particulars which are merely given for the purpose of information.

20-02-2024

| Patent document cited in search report | Publication date | Patent family member(s) | Publication date |
|---|---|---|---|
| US 2022020167   A1 | 20-01-2022 | KR   20220009757 A | 25-01-2022 |
| | | US    2022020167 A1 | 20-01-2022 |

EPO FORM P0459

For more details about this annex : see Official Journal of the European Patent Office, No. 12/82